(19) **Europäisches Patentamt / European Patent Office / Office européen des brevets**

(11) **EP 4 749 536 A1**

(12) **EUROPEAN PATENT APPLICATION**

(43) Date of publication:
**27.05.2026 Bulletin 2026/22**

(51) International Patent Classification (IPC):
*G06N 10/40* (2022.01)

(21) Application number: **24306946.5**

(52) Cooperative Patent Classification (CPC):
**G06N 10/40**

(22) Date of filing: **21.11.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Alice & Bob**
**75015 Paris (FR)**

(72) Inventors:
• **LESCANNE, Raphaël**
  **75015 Paris (FR)**
• **ROUSSEAU, Rémi**
  **75015 Paris (FR)**
• **COTET, Nathanaël**
  **75015 Paris (FR)**

(74) Representative: **Cabinet Netter**
**85 boulevard de Courcelles**
**75008 Paris (FR)**

(54) **SYSTEM AND METHOD FOR PERFORMING A QUANTUM OPERATION ON A BOSONIC QUANTUM SYSTEM**

(57)     There is provided a system (1) for hosting a bosonic qubit, comprising a non-linear superconducting circuit (3) and a command circuit (5). The non-linear superconducting circuit (3) comprises: at least one resonant portion (9), and an asymmetrically threaded superconducting quantum interference device (ATS) (7) coupled to said at least one resonant portion (9), wherein the ATS (7) comprises a pair of Josephson junctions and an inductive element, wherein the pair of Josephson junctions and the inductor are galvanically connected in parallel such that each of the Josephson junctions respectively forms first and second superconducting loops with the inductive element, wherein the non-linear superconducting circuit has a first physical oscillatory mode for hosting the bosonic qubit, the first physical oscillatory mode having a first resonant frequency $\omega_a$ The command circuit (5) comprises a first electromagnetic source (27) configured to thread the first superconducting loop with a first magnetic flux $\phi_1$ and the second superconducting loop with a second magnetic flux $\phi_2$ such that the ATS (7) is threaded with a differential flux $\phi_\Delta = \frac{(\phi_1 - \phi_2)}{2}$ in units of the superconducting flux quantum. The command circuit (5) is further configured to modulate the differential flux $\phi_\Delta = \phi_\Delta(t)$ at a modulation frequency equal to the first resonant frequency $\omega_a$.

**Fig. 1**

**Description**

FIELD OF THE INVENTION

The invention concerns a quantum system and method for performing a quantum operation on a bosonic quantum system, and in particular for performing a displacement drive on a resonator using an asymmetrically threaded SQUID coupled thereto.

BACKGROUND

Quantum computing enables solving certain mathematical calculations which are intractable using classical computers, by encoding information with so-called qubits. Of the many varieties of qubits, stabilized cat qubits (which can be hosted in a physical resonator such as a superconducting resonators) benefit from a noise bias, where bit-flip errors are exponentially suppressed with the average number of bosons (normally photons) in the so-called Schrödinger cat states hosted in a resonator, conventionally termed the "storage" or "memory" resonator.

Of the various stabilization schemes for realising a cat qubit, by far the most mature and performant schemes make use of the so-called asymmetrically threaded SQUID (ATS), which is a wave-mixing non-linear element used to mediate a two-boson exchange between a physical oscillatory mode associated with at least one resonant portion and the environment. This process allows to stabilise cat states (quantum superpositions of coherent states) hosted in the physically oscillatory mode. This physical oscillatory mode is substantially provided by a resonance of the physical "storage" or "memory" resonator (with some small contribution thereof in the ATS so as to enable wave-mixing processes involving this mode), and thus is typically referred to as the "storage" or "memory" mode (herein memory mode). Recent experiments in quantum superconducting circuits have demonstrated this pronounced exponential suppression of bit-flip errors using the ATS as the non-linear element.

A key operation needed for the calibration, preparation and manipulation of a cat qubit system is the so-called displacement drive or pulse, which is comprised of sending electromagnetic radiation to the memory resonator having a frequency substantially equal to that of the memory mode. For instance, the displacement drive on an empty memory resonator prepares a coherent state $|\alpha\rangle$ substantially hosted in the memory resonator with coherent state amplitude $\alpha$ dependent on the strength (amplitude) and duration of the displacement drive.

Another use of a displacement drive performed whilst a cat qubit is stabilized in the memory resonator is to induce a rotation of the cat qubit about the Z-axis of the qubit's Bloch sphere representation, which varies the phase of its coherent superpositions by rotating in a so-called Zeno-blocked manifold. The strength of the displacement drive governs the speed of the rotation and the duration thereof governs the rotation angle achieved (with a $\pi$-roation corresponding to a so-called Z-gate).

Lescanne, Raphaël, et al. "Exponential suppression of bit-flips in a qubit encoded in an oscillator." Nature Physics 16.5 (2020): 509-513 discloses a dedicated "cat-qubit port" which is a memory antenna positioned near-by the cat-qubit resonator to directly drive it.

Réglade, Ulysse, et al. "Quantum control of a cat qubit with bit-flip times exceeding ten seconds." Nature (2024): 1-6 discloses a dedicated "weakly coupled transmission line (which) channels the memory drive" which is a memory antenna positioned near-by the cat-qubit memory resonator to directly drive it.

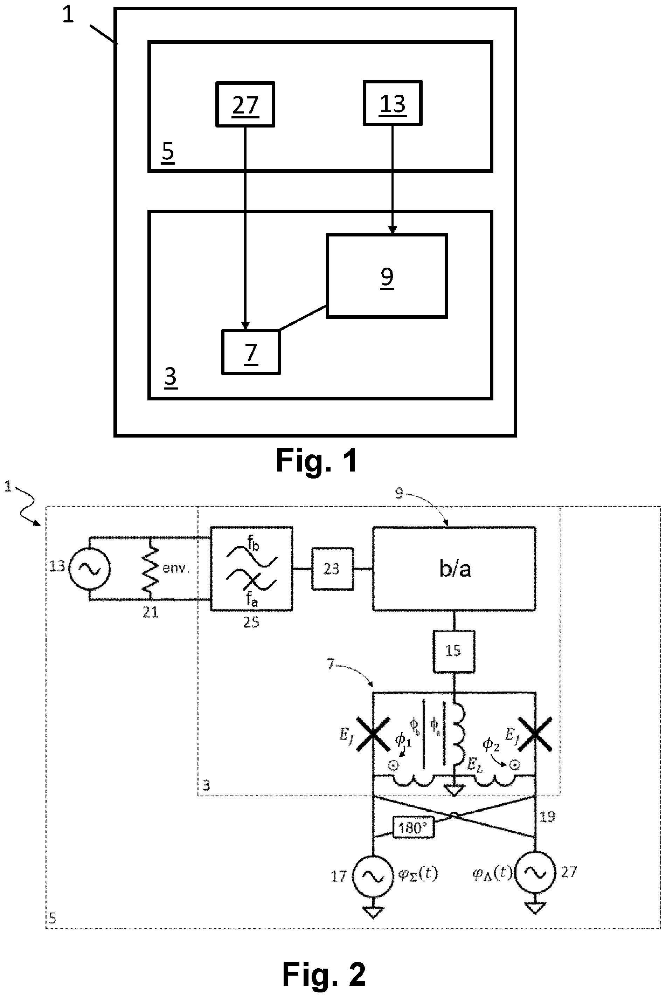

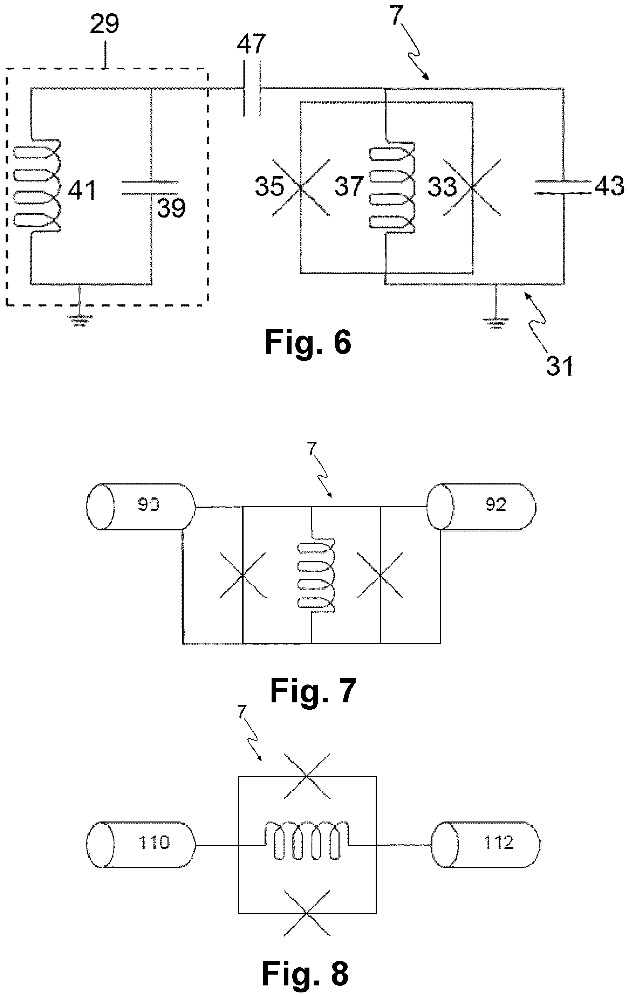

Berdou, Camille, et al. "One hundred second bit-flip time in a two-photon dissipative oscillator." PRX Quantum 4.2 (2023): 020350 discloses a weakly coupled 50-$\Omega$ port coupled to the memory resonator (FIG 1 & 8), which is a memory antenna positioned near-by the cat-qubit memory resonator.

Putterman, Harald, et al. "Preserving phase coherence and linearity in cat qubits with exponential bit-flip suppression." arXiv preprint arXiv:2409.17556 (2024) discloses, in FIGS. 2 and 8, a dedicated storage (i.e. "memory") antenna configured to directly drive the cat-qubit storage resonator to achieve, e.g., storage displacements.

However, use of a dedicated memory antenna requires the use of a dedicated RF port which places additional heat-load stresses on the cryogenic system hosting the cat qubit chip, and further takes up valuable space on the chip.

Moreover, the dedicate memory resonator may contribute to problems of frequency-crowing (wherein accidental resonances between the memory antenna and other components on the chip lead to undesired coupling and spurious interactions arising therefrom) as well as flux-crosstalk.

Furthermore, the dedicated memory antenna may inadvertently provide a leakage channel from the memory resonator or indirectly via spurious coupling to other on-chip components, effectively degrading the quality factor of the memory resonator (e.g. increasing the single photon decay rate therefrom).

This invention aims to address one or more of the aforementioned problems to provide an improved method and system for performing a displacement drive on a memory resonator.

SUMMARY

In a first aspect, there is provided a system for hosting a bosonic qubit, comprising a non-linear superconducting circuit and a command circuit. The non-linear superconducting circuit comprises: at least one resonant portion, and an asymmetrically threaded superconducting quantum interference device (ATS) coupled to said at least one resonant portion, wherein the ATS comprises a pair of Josephson junctions and an inductive element, wherein the pair of Josephson junctions and the inductor are galvanically connected in parallel such that each of the Josephson junctions respectively forms first and second superconducting loops with the inductive element, wherein the non-linear superconducting circuit has a first physical oscillatory mode for hosting the bosonic qubit, the first physical oscillatory mode having a first resonant frequency $\omega_a$. The command circuit comprises a first electromagnetic source configured to thread the first superconducting loop with a first magnetic flux $\phi_1$ and the second superconducting loop with a second magnetic flux $\phi_2$ such that the ATS is threaded with a differential flux $\phi_\Delta = \frac{(\phi_1 - \phi_2)}{2}$ in units of the superconducting flux quantum. The command circuit is further configured to modulate the differential flux $\phi_\Delta = \phi_\Delta(t)$ at a modulation frequency equal to the first resonant frequency $\omega_a$.

Thus, a displacement drive can be applied on the first physical oscillatory mode by means of the ATS, without needing an additional control signal generator and corresponding RF port to directly drive an antenna dedicated to the first mode. This improves the hardware efficiency of the system by reducing the number of RF ports required, and may reduce single-boson leakage rate from the first physical oscillatory mode.

Moreover, what is surprising is that this displacement drive can be performed with high quality via the ATS, given the typically low participation of the first oscillatory mode in the ATS in systems for hosting a bosonic qubit.

The pair of Josephson junctions may have substantially equal Josephson energy.

The non-linear superconducting circuit may comprise at least one flux line, coupled to the first electromagnetic source, which is configured to pass modulating electric current close to the ATS so as to thread the first superconducting loop with the first magnetic flux $\phi_1$ and the second superconducting loop with the second magnetic flux $\phi_2$.

The ATS may be galvanically coupled to the at least one resonant portion.

In embodiments wherein the at least one resonant portion comprises a first resonant portion configured to substantially host the first physical oscillatory mode and a second resonant portion configured to substantially host the second physical oscillatory mode, then the ATS may be galvanically coupled to at least one of the first and second resonant portions, and preferably is galvanically coupled to both the first and second resonant portions.

Alternatively, ATS is capacitively coupled to the at least one resonant portion.

In embodiments wherein the at least one resonant portion comprises a first resonant portion configured to substantially host the first physical oscillatory mode and a second resonant portion configured to substantially host the second physical oscillatory mode, then the ATS may be capacitively coupled to at least one of the first and second resonant portions, and preferably is capacitively coupled to both the first and second resonant portions.

In embodiments, the at least one resonant portion comprises a first resonant portion configured to substantially host the first physical oscillatory mode and a second resonant portion configured to substantially host the second physical oscillatory, and the second resonant portion comprises the ATS.

The non-linear superconducting circuit may be configured to have a second physical oscillatory mode having a second resonant frequency $\omega_b$ and which is more dissipative than the first physical oscillatory mode. The command circuit may comprise: an electromagnetic source configured to deliver, to the at least one resonant portion or the ATS, electromagnetic radiation at a frequency substantially equal to the second resonant frequency $\omega_b$; and a third electromagnetic source configured to thread the ATS with a common flux $\phi_\Delta = \frac{(\phi_1 + \phi_2)}{2}$ in units of the superconducting flux quantum. The command circuit may be further configured to engineer a two-to-one boson exchange between the first physical oscillatory mode and the second physical oscillatory mode by: (i) biasing, with the first and third electromagnetic sources, the ATS at a DC flux bias working point given by $\phi_\Delta^{(DC)} = \pm\frac{\pi}{2} \, mod \, 2\pi$ and/or $\phi_\Sigma^{(DC)} = \pm\frac{\pi}{2} \, mod \, 2\pi$; (ii) modulating the common flux $\phi_\Sigma = \phi_\Sigma^{(DC)} + \phi_\Sigma(t)$ at a modulation frequency $\omega_p$ equal to the absolute value of the difference between twice the first resonant frequency $\omega_a$ and the second resonant frequency $\omega_b$, $\omega_p = |2\omega_a - \omega_b|$.

Here, the modulation of the differential flux is thus given by $\phi_\Delta(t) = \phi_\Delta^{(DC)} + \delta(t)$ wherein $\delta(t)$ denotes the AC component having the modulation frequency equal to the first resonant frequency $\omega_a$.

The electromagnetic source configured to deliver electromagnetic radiation at a frequency substantially equal to the second resonant frequency $\omega_b$ may be a second electromagnetic source (distinct to the first and third electromagnetic sources) configured to deliver the electromagnetic radiation at a frequency substantially equal to the second resonant frequency $\omega_b$ directly to the at least one resonant portion.

The command circuit may be further configured stabilize a dissipative cat qubit as the bosonic qubit by: (iii) whilst performing operations (i) and (ii), delivering to the at least one resonant portion, with the second electromagnetic source, electromagnetic radiation at a frequency substantially equal to the second resonant frequency $\omega_b$ to drive the second physical oscillatory mode.

The electromagnetic source configured to deliver electromagnetic radiation at a frequency substantially equal to the second resonant frequency $\omega_b$ may be the first electromagnetic source configured to thread the ATS with the differential flux $\phi_\Delta = \dfrac{(\phi_1 - \phi_2)}{2}$, and wherein the command circuit is further configured to modulate the differential flux $\phi_\Delta = \phi_\Delta(t)$ at a modulation frequency equal to the second resonant frequency $\omega_b$.

The command circuit may be further configured stabilize a dissipative cat qubit as the bosonic qubit by: (iii) whilst performing operations (i) and (ii), delivering to the ATS, with the first electromagnetic source modulating the differential flux $\phi_\Delta = \phi_\Delta(t)$ at a modulation frequency equal to the second resonant frequency $\omega_b$, electromagnetic radiation at a frequency substantially equal to the second resonant frequency $\omega_b$ to drive the second physical oscillatory mode.

The command circuit may be configured to modulate the differential flux $\phi_\Delta = \phi_\Delta(t)$ at the modulation frequency equal to the first resonant frequency $\omega_a$ for a period of time so as to perform a Z-gate on the dissipative cat qubit.

The command circuit may be configured to stabilize a squeezed cat qubit or a moon cat qubit as the dissipative cat qubit.

The command circuit may be configured to stabilize a GKP qubit as the bosonic qubit.

The system may comprise two or more non-linear superconducting circuits each having a respective first physical oscillatory mode for hosting a dissipative cat qubit, wherein each of the non-linear superconducting circuits comprises only two or three RF ports.

If a non-linear superconducting circuit comprises only two RF ports, then each RF port is respectively coupled to the first and third electromagnetic sources. If a non-linear superconducting circuit comprises only three RF ports, then each RF port is respectively coupled to the first, second, and third electromagnetic sources

In a second aspect, there is provided a method for operating a system which is configured to host a bosonic qubit. The system comprises a non-linear superconducting circuit and a command circuit. The non-linear superconducting circuit comprises: at least one resonant portion, and an asymmetrically threaded superconducting quantum interference device (ATS) coupled to said at least one resonant portion, wherein the ATS comprises a pair of Josephson junctions and an inductive element, wherein the pair of Josephson junctions and the inductor are galvanically connected in parallel such that each of the Josephson junctions respectively forms first and second superconducting loops with the inductive element, wherein the non-linear superconducting circuit has a first physical oscillatory mode for hosting the bosonic qubit, the first physical oscillatory mode having a first resonant frequency $\omega_a$. The command circuit comprises a first electromagnetic source configured to thread the first superconducting loop with a first magnetic flux $\phi_1$ and the second superconducting loop with a second magnetic flux $\phi_2$ such that the ATS is threaded with a differential flux $\phi_\Delta = \dfrac{(\phi_1 - \phi_2)}{2}$ in units of the superconducting flux quantum. The method comprises: threading the first superconducting loop with the first magnetic flux $\phi_1$ and the second superconducting loop with the second magnetic flux $\phi_2$ such that the ATS is threaded with a differential flux $\phi_\Delta = \dfrac{(\phi_1 - \phi_2)}{2}$; and modulating the differential flux $\phi_\Delta = \phi_\Delta(t)$ at a modulation frequency equal to the first resonant frequency $\omega_a$.

The method of the second aspect may comprise one or more of the features and embodiments of the first aspect. For instance, the method of the second aspect may comprise performing the operations for which the command circuit is configured for.

BRIEF DESCRIPTION OF THE DRAWINGS

Various embodiments of the invention will now be described, by way of example only, and with reference to the accompanying drawings in which:

Figure 1 shows a diagram of a generic quantum system comprising a non-linear superconducting quantum circuit and a command circuit which may provide a boson qubit, according to an embodiment of the invention;

Figure 2 shows components of a quantum system for stabilizing a cat qubit by implementing a parametric dissipative stabilization with an ATS, according to an embodiment of the invention;

Figure 3 shows a partial electrical equivalent diagram of a first galvanic example implementation of the quantum system of Figure 2;

Figure 4 illustrates a partial electrical equivalent diagram of a second galvanic example implementation of the quantum system of Figure 2;

Figure 5 illustrates a partial electrical equivalent diagram of a third galvanic example implementation of the quantum system of figure 2;

Figure 6 illustrates a partial electrical equivalent diagram of a capacitive example implementation of the quantum system of Figure 3;

Figure 7 represents another embodiment of a galvanic example implementation of the quantum system of Figure 2;

Figure 8 represents another embodiment of a galvanic example implementation of the quantum system of Figure 2;

Figure 9 shows an example of flux bias lines used to flux bias an ATS, according to an embodiment; and

Figure 10 shows a diagram of a quantum system comprised of a plurality of qubit-hosting sub-systems which are each the system of Figure 1, according to an embodiment.

## DETAILED DESCRIPTION

Figure 1 shows an exemplary quantum system 1 which is arranged to host a bosonic qubit, such as a so-called cat qubit, or other bosonic qubit such as a GKP qubit. By "bosonic qubit" herein we mean a bosonic mode or a superposition of bosonic modes which may be used to encode quantum information. For simplicity, we describe in detail the stabilization of a cat qubit.

A two-legged cat qubit is defined as a two-dimensional manifold spanned by the so-called cat states $|C_\alpha^\pm\rangle$ which are superpositions of two coherent states $|\alpha\rangle$ and $|-\alpha\rangle$:

$$|C_\alpha^\pm\rangle = N^\pm(|\alpha\rangle \pm |-\alpha\rangle), \text{ where } N^\pm = 1/\sqrt{2(1 \pm e^{-2|\alpha|^2})}.$$

Stabilized cat qubits are known to benefit from a high noise bias, which means that the bit-flip probability is exponentially smaller than the phase-flip probability. More precisely, an effective error channel (e.g., bit errors or "bit-flips") is suppressed in an exponential way with the "size" - i.e. the average number of photons $\overline{n} = |\alpha|^2$ - of the Schrödinger cat states of the cat qubits. As previously mentioned, this exponential suppression of bit-flips is only at the cost of linear increase of phase-flips.

The cat qubits can be stabilized or confined by the following exemplary schemes:

(A) A parametric dissipative stabilization, with jump operator $L_2 = \sqrt{\kappa_2}(a^2 - \alpha^2)$, where $\kappa_2$ is the two-photon dissipation rate, $a$ is the photon annihilation operator of the memory mode a and $\alpha$ is a complex number defining the cat qubit. This jump operator can be realized by coupling a lossy buffer mode b with dissipation rate $\kappa_b$, and a four-wave mixing non-linear element - typically a Josephson junction or an asymmetrically threaded SQUID (ATS) - to the memory mode a and by engineering the Hamiltonian $H/_\hbar = g_2(a^2 - \alpha^2)b^\dagger + \text{h.c.}$, where b is the photon annihilation operator of the buffer mode b and $g_2$ is the two-photon coupling rate, by applying to the four-wave mixing non-linear element a pump at frequency $|2f_a - f_b|$ and a drive of the buffer mode b at frequency $f_b$ provided $g_2 < \kappa_b$.

(B) A Kerr Hamiltonian $H/_\hbar = \frac{K}{2}\left(a^{\dagger 2} - \alpha^2\right)\left(a^2 - \overline{\alpha^2}\right)$, where $K$ is the amplitude of the Kerr Hamiltonian, $a$ is the photon annihilation operator, and $|\alpha|^2$ is the mean photon number.

(C) A detuned Kerr Hamiltonian $H/_\hbar = \frac{K}{2}\left(a^{\dagger 2} - \alpha^2\right)\left(a^2 - \overline{\alpha^2}\right) - \Delta a^\dagger a$, where $K$ is the amplitude of the Kerr Hamiltonian, $a$ is the photon annihilation operator, $\alpha$ is a complex number defining the cat qubit, and $\Delta$ is the detuning factor.

(D) A two-photon exchange (TPE) Hamiltonian $H/_\hbar = g_2(a^2 - \alpha^2)\sigma_+ + \text{h.c.}$, where $g_2$ is the complex two-photon coupling rate, $a$ is the photon annihilation operator, $\alpha$ is a complex number defining the cat qubit, and $\sigma_\pm$ are the lowering and raising operators of the two-level system. This Hamiltonian can be engineered in the same way as the parametric dissipative stabilization (A).

(E) A dissipative squeezing stabilization, with jump operator $L_{SC} = \sqrt{\kappa_{SC}}\left(\left(\cosh(r)a + \sinh(r)e^{i\theta}a^\dagger\right)^2 - \alpha^2\right)$, where $\kappa_{SC}$ is the squeezed two-photon dissipation rate, $a$ is the photon annihilation operator of the memory mode a, $\alpha$ is a complex number defining the cat qubit, r and $\theta$ are the modulus and argument of the complex squeezing parameter $\xi = re^{i\theta}$. This jump operator can be realized by coupling a lossy buffer mode b with dissipation rate $\kappa_b$, and a four-wave mixing non-linear element - typically a Josephson junction or an ATS -, to the memory mode a and by engineering the Hamiltonian

$$H/_\hbar = g_{SC}\left(\left(\cosh(r)a + \sinh(r)e^{i\theta}a^\dagger\right)^2 - \alpha^2\right)b^\dagger + \text{h. c.}$$ , where b is the photon annihilation operator of the buffer mode b and $g_{SC}$ is the squeezed two-photon coupling rate, with several pumps at frequencies $|2f_a - f_b|$, $f_b$ and $2f_a + f_b$, and a drive of the buffer mode b at frequency $f_b$ provided $g_{SC} < \kappa_b$.

(F) A variant of the previous stabilization scheme (E), for which the Applicant filed the European patent application EP 23175147.0, in which a bosonic qubit - called *"moon cat qubit"* since the two blobs of the Wigner function have a crescent moon shape - is stabilized by engineering the Hamiltonian $H/_\hbar = g_2(a^2 + \lambda a^\dagger a - \alpha^2)b^\dagger + \text{h. c.}$,

where $g_2$ is the two-photon coupling rate, *a* is the annihilation operator of the memory mode a, $\lambda$ is a complex number which phase and amplitude result from the amplitude of longitudinal coupling produced by a pump at frequency $f_b$, *a* is a complex number resulting from a drive of the buffer mode b at frequency $f_b$ and b is the annihilation operator of the buffer mode b; a comparison between the moon cat qubit and the squeezed cat qubit could be established by expressing $\lambda$ as a function of the complex squeezing parameter $\varsigma = re^{i\theta}$ as follows: $\lambda = 2\tanh(r)$.

(G) A resonant dissipative stabilization, for which the Applicant filed the European patent application EP 21306965.1, with jump operator $L_2 = \sqrt{\kappa_2}(a^2 - \alpha^2)$, where $\kappa_2$ is the two-photon dissipation rate, *a* is the photon annihilation operator of the memory mode a and $\alpha$ is a complex number defining the cat qubit. This jump operator can be realized by coupling a lossy buffer mode b with dissipation rate $\kappa_b$, and a three-wave mixing non-linear element to the memory mode a which engineers the Hamiltonian $H/_\hbar = g_2(\alpha^2 - \alpha^2)b^\dagger + \text{h. c.}$, where *b* is the photon annihilation operator of the buffer mode b provided the mode frequencies verify substantially $2f_a = f_b$ and $g_2 < \kappa_b$ to which a drive of the buffer mode at frequency $f_b$ is added.

The present invention is generic and is not limited to a specific stabilization scheme, provided that the quantum system comprises an ATS, as discussed in detail below. Indeed, one or more of the above schemes can be used in isolation or in combination to stabilize a two-legged or a multi-legged cat qubit.

As illustrated in Figure 1, the quantum system 1 comprises a non-linear superconducting quantum circuit 3 and a command circuit 5. In the case of stabilizing a cat qubit, the non-linear superconducting quantum circuit 3 may be arranged to make possible non-linear wave mixing (e.g., three- or four-wave mixing) between a first mode a and a second mode b. In the following, the first mode a may be used as a memory hosting a cat qubit, while the second mode b may be used as a buffer in between the cat qubit and the external environment.

The first mode a and the second mode b each correspond to natural resonant frequencies of the non-linear superconducting quantum circuit 3. Consequently, the first mode a and the second mode b each have a respective resonant frequency. The first mode a has a resonant frequency $f_a = \frac{\omega_a}{2\pi}$ and the second mode b has a resonant frequency $f_b = \frac{\omega_b}{2\pi}$, where $\omega_a$ and $\omega_b$ are the respective angular frequencies of the first mode a and the second mode b.

By "having" a first mode and a second mode, it should be understood here that the non-linear superconducting quantum circuit 3 comprises components operating in a superconducting regime which host the modes independently of each other or concurrently. In other words, the first mode a and the second mode b may be hosted in different subsets of components of the superconducting circuit or on the same subset of components. For instance, by the non-linear superconducting circuit 3 having a first physical oscillatory mode for hosting the bosonic qubit, it is meant that (at least) the at least one resonant portion 9 and the ATS 7 coupled thereto together define an oscillatory system having the first physical oscillatory mode, wherein the majority of the first physical oscillatory mode is hosted by the at least one resonant portion 9 with only small participation thereof in the ATS (quantified by the zero-point fluctuation of the phase of the memory mode across the ATS 7, $\phi_a$, as known in the art and discussed more below).

The memory mode a has a high-quality factor $Q_a$ while the buffer mode b has a low-quality factor $Q_b$. As will be appreciated, the quality factor (Q-factor) can be determined in various ways, for instance by: (a) spectroscopic linewidth measurement, wherein the quality factor is given by $Q = f/\Delta f$, wherein $f$ is resonant frequency and $\Delta f$ is the spectroscopic linewidth; or (b) via a time-domain measurement wherein a tone is sent in, and a return signal is measured after a pre-determined time, wherein $Q = f * \tau$ with $\tau$ the characteristic decay time. Of course, the skilled person would be aware of various other methods for determining the quality factor of a particular mode.

The non-linear superconducting quantum circuit 3 is intended to be subject to electromagnetic radiation delivered by the command circuit 5 in order to engineer various non-linear interactions between the first mode a and the second mode b. The frequency of each electromagnetic radiation is tuned to select specific terms within the rotating wave approximation. Typically, for superconducting materials such as aluminium, the electromagnetic radiation used herein may be in the microwave regime.

The non-linear superconducting quantum circuit 3 comprises a non-linear element 7 and at least one resonant portion 9. The non-linear element 7 is a four-wave mixing non-linear element in the form of an ATS suitable for parametric dissipative stabilization schemes such as scheme (A) above.

The resonant portion 9 is arranged to be connected to the ATS 7 to provide the non-linear superconducting quantum circuit 3 with the first mode a and the second mode b having respective resonant frequencies $f_a$ and $f_b$. More particularly, the first mode a and the second mode b "participate" in the non-linear element 7, which means that a portion or the entirety of the mode magnetic energy is stored in the non-linear element 7. Such a participation can be quantified by the zero-point fluctuation of the superconducting phase across the non-linear element 7, noted $\varphi_a$ for the first mode a and $\varphi_b$ for the second mode b.

In the schematic diagram of the quantum system 1 illustrated in Figure 1, the non-linear superconducting quantum system 3 comprises only one resonant portion, i.e. the resonant portion 9. This may be achieved via design of the resonator (e.g. various capacitances and inductances as defined for instance by the resonator geometry) such that it hosts modes of different frequencies. The design may also result in the modes having different engineered quality factors.

However, in general it should be understood here that the non-linear superconducting quantum system 3 comprises at least one resonant portion, and typically two or more resonant portions to form the two electromagnetic modes, which act as a cat qubit "memory" mode and a buffer mode.

The first resonator potion may be provided by a 3D resonator, such as a cavity machined out of high purity aluminium (e.g. above 99.99% purity). Similarly, the second resonator portion may provided as an antenna-like cavity. Alternatively, the first and second resonator potions may be provided by a 2D resonator, such as a co-planar waveguide design. Some resonator portions may be 3D, some may be 2D.

Although electromagnetic resonators are convenient for design and control purposes, the resonator portions need not necessarily be electromagnetic resonators. In particular, for the first resonator portion which hosts the cat qubit, it could be a nanomechanical resonator, such as phononic-crystal-defect resonators (PCDRs), similar to those described in P. Arrangoiz-Arriola, E. A. Wollack, Z. Wang, M. Pechal, W. Jiang, T. P. McKenna, J. D. Witmer, R. Van Laer, and A. H. Safavi-Naeini's work, "Resolving the energy levels of a nanomechanical oscillator," published in Nature 571, 537 (2019). These PCDRs are periodically patterned suspended nanostructures that support localized acoustic resonances in the gigahertz range. They are made from a piezoelectric material like LiNbO3, enabling the coupling of these resonances to superconducting circuits with nearly the same efficiency as standard electromagnetic cavities. Specifically, quasi-one-dimensional PCDRs made from lithium niobate, a piezoelectric crystalline material, could be used, with modes localized within a volume less than 1 $\mu$m3 of a suspended nanostructure.

In such acoustic resonators, the cat qubit is encoded in the phonons of the resonator.

Other types of acoustic resonators, such as acoustic membranes, also exist. The primary requirement is an acoustic-to-electromagnetic coupler, to couple the acoustic first resonator portion to the non-linear element 7.

Furthermore, other types of resonators may be used, such as a magnetic resonator wherein the quanta of oscillations are magnons (collective spin excitations). An example could be a designed yttrium-ion-garnet (YIG) particle, as described in Kounalakis, Marios, Gerrit EW Bauer, and Yaroslav M. Blanter. "Analog quantum control of magnonic cat states on a chip by a superconducting qubit." Physical review letters 129.3 (2022): 037205. Again, there is a requirement to couple magnetic first resonator portion to the non-linear element 7. Yet another type of resonator suitable for hosting cat qubits could be semiconductor double quantum dots embedded in a cavity such as a split-ring resonator cavity as disclosed in Kozin, Valerii K., et al. "Quantum phase transitions and cat states in cavity-coupled quantum dots." Physical review research 6.3 (2024): 033188.

Thus, herein a cat qubit may be encoded in the bosons of the resonator. Herein, for the sake of simplification, the 2-to-1 boson exchange is a 2-to-1 photon exchange, however it will be appreciated that all reference to photons and photon exchange regarding the first mode which hosts the cat qubit can be replaced with bosons or boson exchange (e.g. acoustic phonons, or magnons, or indeed plasmons).

The command circuit 5 is arranged to deliver electromagnetic control signals, such as electromagnetic radiation, current biases, or DC voltage biases. To this end, as illustrated in Figure 1, the command circuit 5 comprises at least a first electromagnetic source 27 and second electromagnetic source 13. The command circuit 5 may be arranged at least to drive the second mode b by delivering electromagnetic radiation, using the second electromagnetic source 13, at a frequency substantially equal to the second resonant frequency $f_b$ to the resonant portion 9. Moreover, contrary to the prior art, the command circuit may be configured to achieve a drive of the first mode purely by addressing the ATS 7 using the first electromagnetic source 27, as discussed in more detail below.

By "a frequency substantially equal to", it should be understood that, ideally, the frequency is exactly equal to the desired value. However, in practice, the frequency value deviates from the desired value, typically by 1 or even 5%, due to the inherent precision of the hardware used.

Moreover, as will be understood, the frequency of a mode may be shifted in use. For instance, under certain dynamical interactions such as application of an electromagnetic pump to the resonant portion 9, the frequencies of the first mode a and the second mode b may be effectively shifted (e.g. Stark shifted) due to the presence of a static potential or dynamical interaction. However, the skilled person would be well aware of characterising such effective frequencies, and for simplicity herein, by the first mode a and the second mode b "having" respective resonant frequencies $f_a$ and $f_b$, it will be understood as static meaning "un-dressed" frequencies or shifted "dressed" frequencies when in the presence of a dynamical interaction, depending on the situation.

Figure 2 illustrates an embodiment in which the quantum system 1 is arranged to perform the parametric dissipative stabilization to stabilize a cat qubit, wherein the non-linear element 7 is an ATS. An ATS (short for "asymmetrically threaded superconducting quantum interference device" is an inductive dipole element formed by a pair of Josephson junctions (indicated by the crosses and $E_J$ label in Figure 2) being shunted by an inductive element or inductance (indicated by the $E_L$ label in Figure 2). The inductive element may be formed for instance from a linear array of Josephon junctions or may be formed geometrically (e.g. via a meandering co-planar wave guide portion). The Josephson junctions are each arranged on a different superconducting path such that they each form a distinct loop with the inductance, such that the ATS can be viewed as two (herein first and second) superconducting loops connected by the shared edge which comprises the inductance. The ATS is thus sensitive to the magnetic flux threaded through each of the two loops.

Namely, the command circuit 5 in general comprises a control signal generator configured to thread the first superconducting loop with a first magnetic flux $\phi_1$ and the second superconducting loop with a second magnetic flux $\phi_2$ as indicated in Figure 2. Notably, the control signal generator may be configured to thread the loops of the ATS with a so-called differential flux given by half of the difference between the first and second magnetic fluxes $\phi_\Delta = \frac{(\phi_1 - \phi_2)}{2}$, and optionally a so-called common flux given by the average of the first and second magnetic fluxes $\phi_\Sigma = \frac{(\phi_1 - \phi_2)}{2}$, as discussed in more detail below.

The at least one resonant portion 9 is coupled via a coupler 15 to the ATS 7 (e.g. a linear coupler 15) which acts as an inductive element, such that the first mode a and the second mode b participate in the ATS 7. Example of embodiments for the linear networks which form the at least one resonant portion are known. For instance, among these embodiments, the non-linear superconducting quantum circuit 3 can be a two-mode hybridized system (also known as "galvanic cat", for which the Applicant has filed patent application EP22306815.6 and EP22306816.4) for which two lumped modes couple strongly via the ATS.

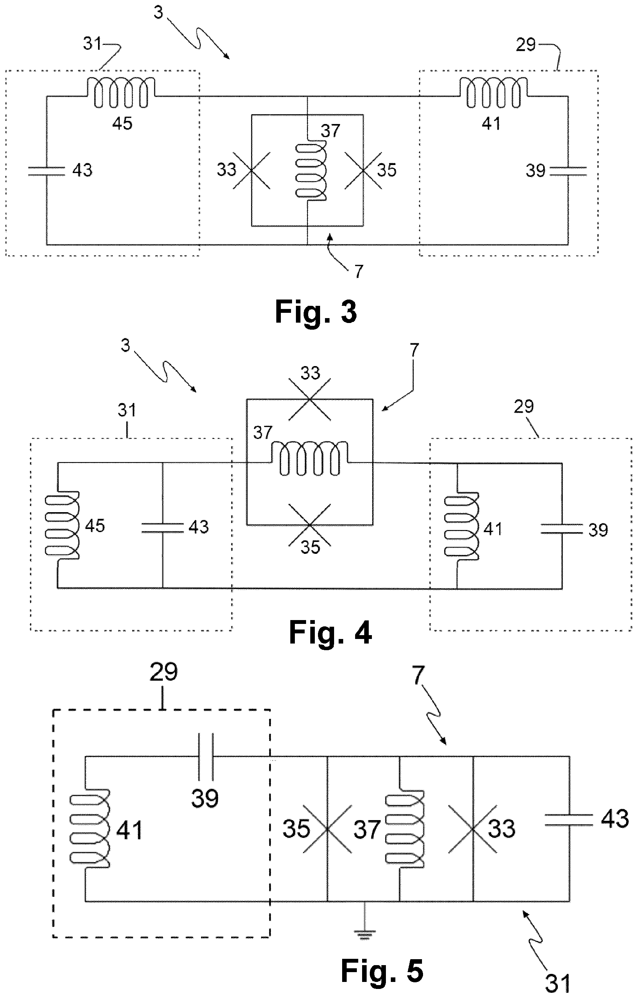

For instance, Figures 3 and 4 illustrate electrical equivalent diagrams of respective embodiments of the non-linear superconducting quantum circuit 3 which takes the form of a galvanic circuit. Such electrical equivalent diagrams are partial since they both only represent the ATS 7 and the at least resonant portion 9 (and thus do not represent many of the other elements, e.g., neither the linear coupler 23 nor the electromagnetic filter 25 described in more detail below in reference to Figure 2). More particularly, the at least one resonant portion 9 includes a first resonant portion 29 and a second resonant portion 31.

The ATS 7 is realized as known in the art, for example in R. Lescanne et al. (2020), and thus includes a first Josephson junction 33 and a second Josephson junction 35 in parallel, and an inductive element 37 in parallel between them. As a result, the ATS 7 has its two connected loops, each loop comprising a respective Josephson junction 33, 35 in parallel with the inductive element 37.

Both the first resonant portion 29 and the second resonant portion 31 are galvanically coupled to the ATS 7. The first resonant portion 29 confers the memory mode a having the resonant frequency $f_a$ to the non-linear superconducting quantum circuit 3, while the second resonant portion 31 confers the buffer mode b having the resonant frequency $f_b$ to the non-linear superconducting quantum circuit 3.

By "galvanically coupled", it should be understood here that there are short electrically conducting portions which connect the first resonant portion 29 and the second resonant portion 31 to the ATS 7, i.e., a short electrically conducting track or any other mean ensuring a physically continuous conducting junction. The expression "short" means that the electrically conducting track has an impedance which is negligeable compared to the impedance of the ATS 7, as well as the first resonant portion 29 and the second resonant portion 31 at the resonant frequencies $f_a$ and $f_b$ respectively. These short electrically conducting portions correspond to the linear coupler 15.

In the embodiment of Figure 3, the first resonant portion 29 includes a capacitive element 39 and an inductive element 41 which are connected in series. Similarly, the second resonant portion 31 includes a capacitive element 43 and an inductive element 45 which are connected in series.

The inductive and capacitive elements described in relation to Figure 3 (and indeed in relation to any of Figures 4-6) could be realized as substantially distinct "lumped" elements, e.g. a geometric inductor or chain of Josephson junctions could provide the inductive element, whereas two conducting elements separated by a distance could provide the capacitive element (e.g. two conducting pads facing each other in 3D, or a conductive island surrounded by a ground plane in 2D). Alternatively, the inductive and capacitive elements could be provided together in a single superconducting resonator such as a co-planar wave guide or 3D extruded cavity such that the structure of the resonator inherently provides the inductive and capacitive qualities. The skilled person would be well aware of how to determine the inductive and capacitive qualities of a structure in a superconducting circuit, e.g. via finite-element modelling, or electromagnetic scattering matrix simulations, or experimental spectroscopy.

In the embodiment of Figure 4, the first resonant portion 29 also includes the capacitive element 39 and the inductive element 41. However, in such an embodiment, the capacitive element 39 and the inductive element 41 are connected in parallel. Similarly, the capacitive element 43 and the inductive element 45 of the second resonant portion 31 are connected in parallel.

In the respective embodiments of Figures 3 and 4, the non-linear superconducting quantum circuit 3 includes two resonant portions 29 and 31. However, as previously explained, the non-linear superconducting quantum circuit 3 may comprise only one resonant portion 9 arranged to produce both the memory mode a and the buffer mode b.

Figure 5 illustrates an electrical equivalent diagram of an embodiment of the non-linear superconducting quantum circuit 3 which takes the form of a galvanic circuit.

Such a circuit can be described as "minimal" in that it involves as few elements as possible to have the memory mode a and the buffer mode b: two capacitive elements 39 and 43 and two inductive elements 41 and 7.

While the first resonant portion 29 is unchanged compared to that of Figure 3 since the first resonant portion 29, which confers the memory mode a to the non-linear superconducting quantum circuit 3, still includes a capacitive element 39 and an inductive element 41 connected in series, the ATS 7 now plays both the role of inductive element to produce the buffer mode b and four-wave mixing non-linear element to generate the 2-to-1 photon exchange between the memory mode a and the buffer mode b. In other words, the ATS 7 replaces the inductive element 45 of the embodiments of figures 4 and 5 in the second resonant portion 31.

Similarly, it is possible to use the ATS 7 as the inductive element of the first resonant portion 29 instead of the inductive element 41.

Figure 6 illustrates an electrical equivalent diagram of an embodiment of the non-linear superconducting quantum circuit 3 which takes the form of a capacitive circuit.

Again, such an electrical equivalent diagram is partial since it only represents the ATS 7 and the at least one resonant portion 9, and thus does not represent many of the other features of the system. More particularly, the at least one resonant portion 9 includes the first resonant portion 29 and the second resonant portion 31. Compared to the galvanic circuits of Figures 3-5, the same reference signs have been kept for ease of understanding.

The first resonant portion 29 is capacitively coupled to the second resonant portion 31. More particularly, the first resonant portion 29 and the second resonant portion 31 are coupled together via a capacitive element 47.

Like the galvanic circuit of Figure 5, the capacitive circuit can be described as "minimal" in that it involves as few elements as possible to have the memory mode a and the buffer mode b: two capacitive elements 39 and 43 and two inductive elements 41 and 7.

As will be appreciated, other capacitive circuits could be envisaged, such as where the second resonant portion 31 includes its own capacitive element (in a similar manner as described in Figures 3 and 4), and wherein the ATS 7 is instead capacitively coupled to the second resonant portion 31 as well as to the first resonant portion 29.

Figure 7 represents another embodiment of the "galvanic" cat circuit. This embodiment is different from the embodiments of Figures 3-5 in that the properties of the first resonant mode and of the second resonant mode are usually not accurately described with a simplified symbolic representation involving only two LC resonators. Here, there is only one resonant portion which produces both the first mode and the second mode together with the ATS 7. As shown on this figure, the ATS 7 is shunting an open-ended transmission line into two portions 90 and 92. This circuit is galvanic since the ATS is embedded in the transmission line hosting the resonant modes. If the dimensionless coupling constant k was small, the first mode of the quantum circuit would simply correspond to an LC circuit formed with the ATS 7 and the static capacitance of the transmission line; the second mode would correspond to the bare $\lambda/2$ harmonics of the transmission line coupling to the ATS; the third mode would correspond to the bare $\lambda$ harmonics of the transmission line coupling to the ATS 7; etc. With larger coupling k, however, the symbolic inductance and capacitance values associated with the different bare harmonics of the transmission line are dimensioned altogether to produce the first mode and the second mode when associated with the ATS 7.

The transmission line can be realized in the same superconducting materials as the other elements of the superconducting circuit. If the characteristic impedance required to reach a given value of the respective zero-point fluctuations $\varphi_b$ or $\varphi_a$ is too large to be made geometrically, the center conductor of the transmission line could be replaced by a high kinetic inductance material or a chain of wide Josephson junctions. Finally, the transmission line could be realized with various geometries, for instance coplanar waveguide (CPW), microstrip or slotline. In the example of Figure 7, CPW portion 90 could be capacitively or inductively connected to the microwave filter 110 and the load 106 for coupling to the environment.

The embodiment of Figure 8 is similar to that of Figure 7. There is again an open-ended transmission line which carries both the first mode and the second mode, but the ATS 7 is put in series with two portions 110 and 112 of the transmission line.

Returning to Figure 2, it is known to the skilled person that an ATS can be used to engineer in general a 2-to-1 boson conversion, i.e. the first term $a^2$ of the jump operator LZ, in order to perform a parametric dissipative stabilization More particularly, a 2-to-1 photon conversion between the first mode a and the second mode b is obtained by parametrically pumping the ATS at the frequency $f_p = |2f_a - f_b|$, as successfully shown by Lescanne, Raphaël, et al. "Exponential suppression of bit-flips in a qubit encoded in an oscillator." Nature Physics 16.5 (2020): 509-513. Advantageously, the pump frequency satisfies $f_p \gg g_2$ to make this parametric pumping work as well as possible.

It is known to the skilled person that, in the case of the non-linear element 7 being an ATS 7, when biased at its flux working point (0 - $\pi$, namely 0 flux threaded through one of the loops and $\pi$ flux in unit of the flux quantum threaded through the other of the lopps), the Hamiltonian of the ATS 7 has the following "sin-sin" form:

$$H_{ATS} = -2E_J \sin\big(\varphi_\Sigma(t)\big) \sin(\varphi) + \frac{E_L}{2}\big(\varphi - \varphi_\Delta(t)\big)^2,$$

where $\varphi = \varphi_a(a + a^\dagger) + \varphi_b(b + b^\dagger)$ is the total superconducting phase difference across the ATS 7, $\varphi_a$ is the zero-point fluctuation of the phase of the first mode a across the ATS 7 and $\varphi_b$ is the zero-point fluctuation of the phase of the second mode b across the ATS 7, $E_J$ is the Josephson energy of the side junctions and $E_L$ is the inductive energy of a central inductance, $\varphi_\Sigma(t)$ corresponds to a modulation of the common flux of the two loops of the ATS 7 and $\varphi_\Delta(t)$ corresponds to a modulation of the differential flux of the two loops of the ATS 7. The former can be implemented by delivering electromagnetic radiations through flux lines of the ATS 7 out of phase, the latter can be implemented by delivering electromagnetic radiations through the two flux lines of the ATS 7 in phase.

Parametric pumping of the ATS 7 is typically done by pumping the common flux as pumping the differential flux has conventionally been considered to merely displaces the modes coupled to the ATS 7. As an example, by pumping the common flux at the frequency $f_p = |2f_a - f_b|$, $\varphi_\Sigma(t) = \epsilon_{2ph}\cos(2\pi f_p t)$, the non-linear resonant part of the Hamiltonian writes in the rotating frame: $H_{ATS} = (E_J \epsilon_{2ph} \varphi_a^2 \varphi_b/2) * (a^2 b^\dagger + \text{h. c.})$, which is typically the two-to-one photon exchange Hamiltonian needed to engineer the two-photon stabilization.

When an external DC magnetic field is set such that a 0 mod $2\pi$ magnetic flux threads one of the loop and a $\pi$ mod $2\pi$ flux threads the other loop, it is ensured that the ATS Hamiltonian has its "sin-sin" form. For clarity, the set-up applying the external DC magnetic field is not drawn on Figure 2 but can be applied via the two bottom mutual inductances of the ATS 7. A typical implementation consists in interleaving a bias-tee connected to a DC current source to input DC current into the system while letting the electromagnetic radiations go through. As will be described below, the components which generate the required magnetic fields may be current-carrying flux bias lines close to the ATS 7.

A further, third, electromagnetic source 17 may thus be set-up to modulate the common flux in the ATS 7. For this purpose, an electromagnetic network 19 may be used to split the radiation emitted by the electromagnetic source 17 and apply it to each node of the ATS 7 with the correct phase. Alternatively, two different electromagnetic sources could be used, each being simply coupled to a single node of the ATS 7 and their relative phase and amplitude being set so as to achieve the desired flux modulation. Herein it will be understood that the third electromagnetic source 17 is any one or more sources together configured to modulate the common flux in the ATS 7.

When the third electromagnetic source 17 is set at the frequency $|2f_a - f_b|$, the non-linear superconducting quantum circuit 3 performs the 2-to-1 photon conversion between the first mode a and the second mode b. To convert this 2-to-1 photon conversion into two-photon dissipation, the second mode b is selectively coupled to a load 21 via a linear coupler 23 and an electromagnetic filter 25 configured as a band pass filter with a frequency $f_b$.

Alternatively, the electromagnetic filter 25 may be configured as a band stop filter at a frequency $f_a$ and may be placed in between, on the one hand, the external environment and, on the other hand, the first mode a and the second mode b to isolate the first mode a and thus prevent the first mode a from suffering additional losses coming from unwanted coupling to the load 21.

Alternatively, it may be configured as a low-pass (respectively high-pass) filter if $f_a > f_b$ (resp $f_b > f_a$). In other embodiments, the electromagnetic filter 25 can be omitted when coupling between the load 21 and substantially only the second mode b can be established. The skilled person thus understands that the first mode a has a high-quality factor while the second mode b has a low-quality factor.

As previously explained, the second mode b may be driven at its resonant frequency $f_b$. This drive is performed by electromagnetic source 13 set at frequency $f_b$.

In the above, the load 21 can be seen as part of the command circuit 5 of figure 2, while the linear coupler 23 and the electromagnetic filter 25 can be seen as part of the non-linear superconducting quantum circuit 3.

In addition to stabilizing the cat qubit, the command circuit 5 also enables measurement an observable of the cat qubit or application of a quantum gate to the cat qubit.

The electromagnetic source 11 may be arranged to drive the first mode a by delivering electromagnetic radiation at the frequency $f_a$ to the linear electromagnetic network b/a. Such a drive of the first mode a causes the non-linear superconducting quantum circuit 3 to engineer a Hamiltonian Hz expressed as $H_z/\hbar = \epsilon_z a + \text{h. c.}$ , where the complex rate $\varepsilon_z$ results from the amplitude and phase of the drive of the first mode a.

An additional electromagnetic source may be set-up, in addition to the third electromagnetic source 17, to contribute to the modulation of the common flux in the ATS 7. The additional electromagnetic source may be arranged to deliver electromagnetic radiation for causing the non-linear superconducting quantum circuit 3 to engineer a Hamiltonian. For instance, such a Hamiltonian may yield a so-called longitudinal coupling term between the first mode a and the second mode b, which may be used to apply a readout of the parity of the cat qubit to the buffer mode as detailed in..., or to achieve the squeezing term required to realise the so-called "moon cat" qubit as described in stabilization scheme (F) above.

The first electromagnetic source 27 is configured to modulate the differential flux in the ATS 7, which may be through the electromagnetic network 19. Typically, the first electromagnetic source 27 can be used to reduce spurious Hamiltonian terms induced by the additional electromagnetic source. It is to be noted that the electromagnetic network 19 is used for convenience but can be omitted and the first electromagnetic source 27 and any additional electromagnetic source could be applied directly to both nodes of the ATS 7, their relative phase and amplitude being set so as to achieve the desired flux modulation. Herein it will be understood that the first electromagnetic source 27 is any one or more sources together configured to modulate the delta flux in the ATS 7.

For the sake of completeness, it may also be noted that the first electromagnetic source 27 can also be used, instead of the electromagnetic source 13, to deliver electromagnetic radiation at a frequency $f_b$ to the linear electromagnetic network b/a to drive the second mode b. In this alternative embodiment, the superconducting circuit may comprise the electromagnetic filter 25 coupled between the first electromagnetic source 27 and the ATS 7, for instance integrated as part of the network 19. In this embodiment, the load 19 for dissipating the buffer mode b is connected between the electromagnetic filter 25 and the first electromagnetic source 27 (i.e., in an identical manner as shown in Fig.2 for between the filter 25 and second electromagnetic source 13). Thus, the first electromagnetic source 27 may be configured to drive both the memory mode a and the buffer mode b via suitably modulating the differential flux $\varphi_\Delta$, thereby further reducing the hardware requirements by requiring only two ports per cat qubit circuit (one to deliver the differential flux $\varphi_\Delta$ and the other to deliver the common flux $\varphi_\Sigma$).

In this alternative embodiment, the electromagnetic filter 25 is designed such that the losses from the ATS 7 at the buffer mode b frequency is sufficient with respect to the two-photon exchange rate engineered such that a cat-qubit is stabilizable, whilst sufficiently protecting the memory mode a. Specifically, the electromagnetic filter 25 is designed such that the decay through the network 19 is small (namely smaller than the intrinsic quality of fabrication of the memory resonator) but not filtered to such a degree that the memory mode a is not able to be driven at practical drive strengths. For instance, the electromagnetic filter 25 may be comprised of one or more Purcell resonator(s) appropriately positioned along network 19 such that each acts as a stopband filter centered at the memory frequency, wherein the rejection of each filter is suitably configured as described above to reject the memory mode to a certain degree, but which still enables a memory mode drive of sufficiently high strength to pass.

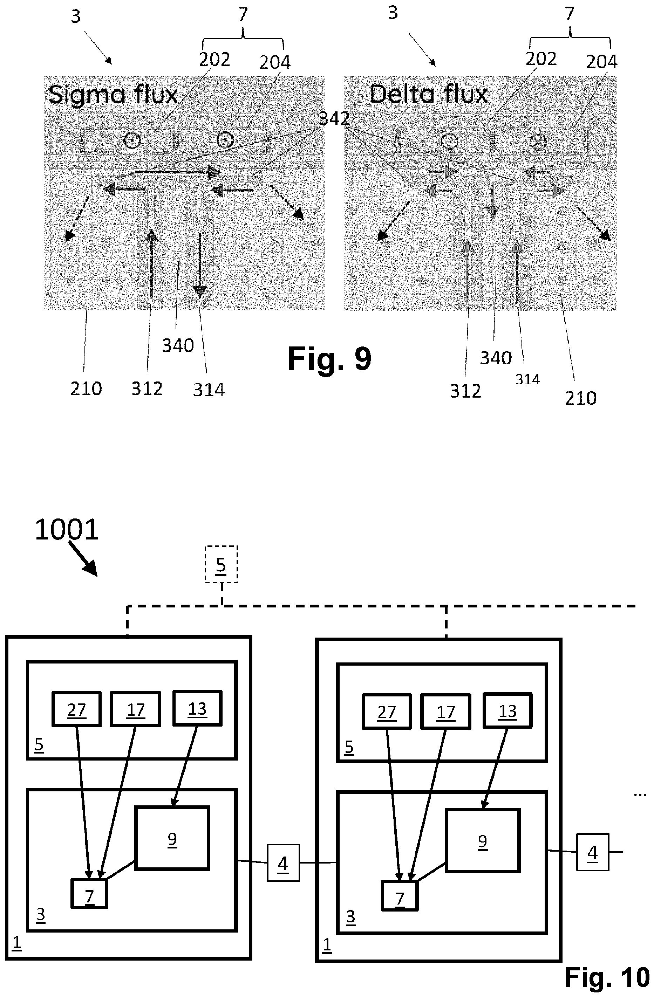

More generally, typically the circuit has flux lines through which radiation can be delivered to provide (and optionally modulate) the common flux (herein also referred to as $\varphi_\Sigma$) and provide (and modulate) the differential flux (herein also referred to as $\varphi_\Delta$). These are generally referred to as the two bias modes. As such, the flux lines may deliver both a DC-bias (setting the working point described above by applying DC current to thread the ATS loops with the relevant magnetic fluxes) and an RF-bias (superposed modulation to permit the time-dependent magnetic flux terms to "pump" the ATS as discussed above), as shown in reference to Figure 9.

The DC-bias working point may be set as $\varphi_\Sigma^{(DC)} = \pm\frac{\pi}{2} \, mod \, 2\pi$ and $\varphi_\Delta^{(DC)} = \pm\frac{\pi}{2} \, mod \, 2\pi$ , although it will be appreciated that the system may be operated slightly off this point and still function sufficiently to stabilize a cat qubit.

In particular, the present Inventors have recognised that by configuring the first electromagnetic source 27 to modulate the differential flux $\phi_\Delta(t)$ at a modulation frequency equal to the first resonant frequency $f_a$, a displacement drive is applied on the memory mode.

Specifically, the potential energy of ATS 7 may be given by:

$$U(\varphi, \varphi_\Delta, \varphi_\Sigma) = \frac{E_{\text{L}}}{2}\varphi^2 - 2E_{\text{J}}\cos(\varphi_\Sigma)\cos(\varphi_\Delta + \varphi) + 2\Delta E_{\text{J}}\sin(\varphi_\Sigma)\sin(\varphi_\Delta + \varphi)$$

where $\varphi$ is the superconducting phase difference across the ATS 7, $\varphi_{\Delta,\Sigma}$ is the differential and common flux as described above, $E_L$ is the ATS inductance energy, $E_J$ is the average Josephson junction energy of each branch (namely, if the first/second Josephson junction has energy $E_{J1/J2}$, then $E_J = (E_{J1} + E_{J2})/2$), and $\Delta E_J = (E_{J1} - E_{J2})/2$ represents the Josephson junction energy asymmetry.

The ATS 7 may be operated at a DC flux-bias (at the aforementioned flux working point, which is a saddle-point in flux) and further subject to AC flux pumps, yielding for instance $\varphi_\Sigma(t) = \frac{3\pi}{2} + \delta(t)$ and $\varphi_\Delta(t) = -\frac{\pi}{2} + \sigma(t)$. The system Hamiltonian may thus be expressed as:

$$H = \hbar\omega_a a^\dagger a + \hbar\omega_b b^\dagger b + \frac{E_L}{2}(\varphi - \delta(t))^2 - \frac{E_L}{2}\varphi^2 + 2E_J \sin(\sigma(t))\sin(\varphi)$$

$$- 2\Delta E_J \cos(\sigma(t))\cos(\varphi) - \frac{E_L}{2}\varphi^2 - \frac{\Delta E_J}{2}\varphi^2$$

with $\varphi = \varphi_a(a + a^\dagger) + \varphi_b(b + b^\dagger)$. The time-dependent part of the differential flux $\delta(t)$ may be considered as being placed into the superconducting phase difference of the inductive element of the ATS 7. For simplicity here we neglect the asymmetry of the side junctions and assume small time-dependent flux variations $\sigma(t), \delta(t) \ll 1$, such that the ATS potential can be approximated as

$$\boldsymbol{U}(t) = \left(2E_J\sigma(t) - E_L\delta(t)\right)\varphi - \frac{E_J}{3}\sigma(t)\varphi^3.$$

The side junctions of the ATS 7 should ideally have substantially equal energy, namely $\Delta E_J/E_J$ less than 10%, preferably less than 5%, and most preferably equal up to fabrication uncertainty.

In any case, the ATS fluxes (namely the common and differential fluxes) can be modulated at one or more chosen angular frequencies. For instance, coherent modulations could be set with angular frequency $\omega_{ATS}$ and respective amplitudes $\sigma$ and $\delta$ such that $\sigma(t) = \sigma\mathcal{R}(e^{i\omega_{ATS}t})$ and $\delta(t) = \mathcal{R}(\delta e^{i\omega_{ATS}t})$. The first term above, $(2E_J\sigma(t) - E_L\delta(t))\varphi$ is a linear drive on the modes with a complex amplitude of $\xi_{1,a/b} = \varphi_{a/b}(2E_J\sigma - E_L\delta)/\hbar$.

Thus, typically when pumping at the aforementioned two-photon parametric pump angular frequency $\omega_{ATS} = \omega_p = |2\omega_a - \omega_b|$ in the common flux (e.g. $\varphi_\Sigma(t) = \varepsilon_{2ph}\cos(\omega_p t)$), the modes are « stark-shifted », which can be accounted for by experimentally characterising the stark shift for particular pump parameters.

However, the present Inventors have recognised a surprising and advantageous use of this linear drive. Namely, by modulating the differential flux $\delta(t)$ at the frequency of the memory mode $\omega_{ATS} = \omega_a$ whilst maintaining substantially zero modulation of the common flux $\varphi_\Sigma(t) = 0$ at the memory mode frequency, then a drive of the memory mode is performed.

Thus, this memory drive is a so-called displacement drive on the memory mode, described by displacement operator $\mathcal{D}(\alpha)$. As will be appreciated, this memory drive essentially couples to the memory resonator's electric field, creating an oscillation at a specified amplitude and phase. If a quantum state already exists in the memory, this has the effect of moving the quantum state in phase space by a complex amplitude $\alpha$ (corresponding to changing position and momentum in phase space), whereas by applying $\mathcal{D}(\alpha)$ on a vacuum state in the memory (i.e. Fock 0), a coherent state with amplitude $\alpha$ is prepared (essentially "displacing" from the origin in phase space). Thus, by controlling the amplitude and phase of this microwave drive, one can control the amplitude and phase of the resulting coherent state, effectively displacing it in phase space.

The above exemplary derivation has taken a DC flux bias point as $\varphi_\Sigma^{(DC)} = \frac{3\pi}{2}$ and $\varphi_\Delta^{(DC)} = -\frac{\pi}{2}$, however the present Inventors have recognised that the memory drive may be applied regardless of the flux threading each loop. What is important is to modulate only the differential flux $\delta(t)$ at the memory frequency with no component of common flux at that frequency $\sigma(t)$ (to avoid activating undesired spurious terms such as $a^\dagger a(a + a^\dagger)$).

If a pair of flux lines are used to each thread respective loops of the ATS with magnetic fluxes $\varphi_1$ and $\varphi_2$, then the correct relative phase between the signals sent through the flux lines can be swept until only the differential flux is modulated. This can be done by: (i) setting a relative phase; (ii) performing a spectroscopy; (iii) analysing the spectroscopy for signatures of spurious interaction; and (iv) iterating (i)-(iv) varying the relative phase each time and selecting the relative phase leading to no signatures of spurious interactions. Alternatively, in some configurations, the drive coupling may be measured at different relative phases, and selecting the relative phase which corresponds to the maximum drive coupling (and further verifying that said relative phase indeed results in pure differential flux by performing e.g. a memory coherent state displacement and subsequent Wigner tomography).

Moreover, the ATS 7 may still be operated (i.e. pumped) at other frequencies whilst simultaneously modulating the differential flux $\delta(t)$ at the frequency of the memory mode $\omega_{ATS} = \omega_a$ (with modulation of the common flux $\varphi_\Sigma(t) = 0$ at $\omega_a$).

For instance, as described above, by setting the DC magnetic field bias of the ATS 7 at the 0-$\pi$ (0 flux threading one loop, $\pi$ flux threading the other loop) and pumping the common flux at the two-photon parametric pump angular frequency $\omega_{ATS} = \omega_p = |2\omega_a - \omega_b|$, a two-to-one photon exchange is performed between the memory mode and the buffer mode. By further driving the buffer mode (i.e. using the second electromagnetic source 13), a cat qubit can be stabilized in the memory mode.

As will be appreciated, by both modulating the differential flux $\delta(t)$ at the frequency of the memory mode $\omega_{ATS} = \omega_a$ (with modulation of the common flux $\varphi_\Sigma(t) = 0$ at $\omega_a$) and at least modulating the common flux at the two-photon parametric pump angular frequency $\omega_{ATS} = \omega_p = |2\omega_a - \omega_b|$ simultaneously, coherent Zeno-blocked oscillations around the cat qubit Z-axis (in its Bloch sphere representation) can be induced. By controlling the duration and amplitude of the applied modulation of the differential flux $\delta(t)$ at the frequency of the memory mode $\omega_{ATS} = \omega_a$, any $\theta$-rotation can be achieved, which is a Z-gate of arbitrary angle $\theta$.

Figure 9 shows an exemplary design of flux lines through which the common flux and a differential flux can be delivered to the ATS 7. The left-hand panel shows the flow of the majority of DC current in solid arrows that results in sigma flux, which is achieved by driving the left 312 and right 314 co-planar waveguide flux line portions with opposing voltages to promote current flow in one direction. An AC component can be added, such that if the relative phase of the AC current between the left 312 and right 314 flux line portions are out of phase, then only the sigma (common) flux is modulated.

The right-hand panel of Figure 9 shows the flow of the majority of DC current in solid arrows that results in delta flux, which is achieved by driving the left 312 and right 314 co-planar waveguide (CPW) flux line portions with similar voltages to promote current flowing in opposite directions passed the left 202 and right 204 loops of the ATS, wherein the current flows meet and return to ground through the shared co-planar conducting portion 340 between the left 312 and right 314 CPW flux line portions. Current-guiding portions 342 are provided to help guide the electrical currents flowing from the distal ends of the left 312 and right 314 CPW flux line portions, so as to achieve the desired magnetic field profiles. An AC component can again be added, such that if the relative phase of the AC current between the left 312 and right 314 flux line portions are in of phase, then only the delta (differential) flux is modulated.

The present invention thus enables driving the memory without resorting to a dedicated antenna (drive line) positioned near to the memory resonator by only using the structures used to flux bias and/or pump the ATS 7, thereby saving space on the chip, potentially improving the quality factor of the memory resonator. By removing the dedicated memory antenna which would otherwise be required, an entire RF port can be dropped, thereby reducing the cable load per cat qubit system (thus alleviating some of the heat load of the cryogenic cabling on the cryogenic cooling system in which the superconducting circuit 3 is operated.

For instance, Figure 10 shows a system or quantum processor 1001 which is arranged to host a two or more cat qubits. The quantum processor 1001 comprises two or more quantum systems 1 as described above each for hosting a cat qubit. Thus, each quantum system 1 comprises a non-linear superconducting circuit 3 comprising at least one resonant portion 9 and an ATS 7 coupled to the at least one resonant portion. The superconducting circuits 3 of each sub-system 6 may be coupled to another of the superconducting circuits 3 by a linear or non-linear coupler 4. What is important is that each superconducting circuit 3 comprises only three RF ports (denoted by the arrows) which enables: (i) the ATS 7 to receive control signals from the third electromagnetic sources 17 and 27 to respectively modulate the common flux and differential flux; and (ii) the at least one resonant portion 9 to received control signals from the electromagnetic source 13 to drive the buffer mode b.

As will be appreciated, the separated boxes designating duplicated electromagnetic sources 27, 17, 13 in Figure 10 is for clarity purposes, and in practice there may be only a single command circuit 5 comprising a single set of electromagnetic sources 27, 17, 13 configured to send the control signals to each of the superconducting circuits 3 through the three dedicated RF ports per cat qubit hosting sub-system 6.

Moreover, in embodiments wherein the buffer drive is also performed via additionally modulating the differential flux at a further frequency (namely the buffer frequency), the second electromagnetic source 13 may be dropped entirely, such that each superconducting circuits 3 of each sub-system 6 of the quantum processor 1001 comprises only two RF ports which enables: (i) the ATS 7 to receive control signals from the third electromagnetic sources 17 and 27 to respectively modulate the common flux and differential flux to drive both the buffer mode b, the memory mode a, and deliver the parametric pump interaction to engineer the two-to-one boson exchange.

The above embodiments have been described in the context of cat qubits, however the present Inventors have recognised that the present Invention may be used in the context of other bosonic qubits, provided that an ATS 7 is coupled to at least one resonant portion 9, for instance as described in Chowdhury, Shoumik, Bosonic Quantum Error Correction with a Heavy Fluxonium Control Qubit. Diss. MIT, 2024, or in Jha, Shantanu R, Extensible Platforms for Bosonic Quantum Error Correction, Diss. MIT, 2024, wherein an ATS is coupled at least to a so-called fluxonium qubit and storage resonator in order to realise a so-called GKP qubit.

**Claims**

1.  System for hosting a bosonic qubit, comprising:

    a non-linear superconducting circuit comprising:

    at least one resonant portion, and
    an asymmetrically threaded superconducting quantum interference device (ATS) coupled to said at least one resonant portion, wherein the ATS comprises a pair of Josephson junctions and an inductive element, wherein the pair of Josephson junctions and the inductor are galvanically connected in parallel such that each of the Josephson junctions respectively forms first and second superconducting loops with the inductive element,
    wherein the non-linear superconducting circuit has a first physical oscillatory mode for hosting the bosonic qubit, the first physical oscillatory mode having a first resonant frequency $\omega_a$; and

    a command circuit comprising a first electromagnetic source configured to thread the first superconducting loop with a first magnetic flux $\phi_1$ and the second superconducting loop with a second magnetic flux $\phi_2$ such that the ATS is threaded with a differential flux $\phi_\Delta = \frac{(\phi_1 - \phi_2)}{2}$ in units of the superconducting flux quantum; and

    wherein the command circuit is further configured to modulate the differential flux $\phi_\Delta = \phi_\Delta(t)$ at a modulation frequency equal to the first resonant frequency $\omega_a$.

2.  The system of claim 1, wherein the pair of Josephson junctions have substantially equal Josephson energy.

3.  The system of claims 1 or 2, wherein the non-linear superconducting circuit comprises at least one flux line, coupled to the first electromagnetic source, which is configured to pass modulating electric current close to the ATS so as to thread the first superconducting loop with the first magnetic flux $\phi_1$ and the second superconducting loop with the second magnetic flux $\phi_2$.

4.  The system of any preceding claim, wherein the ATS is galvanically coupled to the at least one resonant portion.

5.  The system of any preceding claim, wherein the ATS is capacitively coupled to the at least one resonant portion.

6.  The system of any preceding claim, wherein the non-linear superconducting circuit has a second physical oscillatory mode having a second resonant frequency $\omega_b$ and which is more dissipative than the first physical oscillatory mode;

    wherein the command circuit comprises:

    an electromagnetic source configured to deliver, to the at least one resonant portion or the ATS, electromagnetic radiation at a frequency substantially equal to the second resonant frequency $\omega_b$; and

    a third electromagnetic source configured to thread the ATS with a common flux $\phi_\Delta = \frac{(\phi_1 + \phi_2)}{2}$ in units of the superconducting flux quantum; and

    wherein the command circuit is further configured to engineer a two-to-one boson exchange between the first physical oscillatory mode and the second physical oscillatory mode by:

    (i) biasing, with the first and third electromagnetic sources, the ATS at a DC flux bias working point given by

    $$\phi_\Delta^{(DC)} = \pm \frac{\pi}{2} \ mod \ 2\pi \ \text{ and/or } \ \phi_\Sigma^{(DC)} = \ \pm \frac{\pi}{2} \ mod \ 2\pi \ ;$$

    (ii) modulating the common flux $\phi_\Sigma = \phi_\Sigma^{(DC)} + \phi_\Sigma(t)$ at a modulation frequency $\omega_p$ equal to the absolute value of the difference between twice the first resonant frequency $\omega_a$ and the second resonant frequency $\omega_b$, $\omega_p = |2\omega_a - \omega_b|$.

7.  The system of claim 6, wherein the electromagnetic source configured to deliver electromagnetic radiation at a frequency substantially equal to the second resonant frequency $\omega_b$ is a second electromagnetic source configured to deliver the electromagnetic radiation at a frequency substantially equal to the second resonant frequency $\omega_b$ directly to the at least one resonant portion.

8. The system of claim 7, wherein the command circuit is further configured stabilize a dissipative cat qubit as the bosonic qubit by:
(iii) whilst performing operations (i) and (ii), delivering to the at least one resonant portion, with the second electromagnetic source, electromagnetic radiation at a frequency substantially equal to the second resonant frequency $\omega_b$ to drive the second physical oscillatory mode.

9. The system of claim 6, wherein the electromagnetic source configured to deliver electromagnetic radiation at a frequency substantially equal to the second resonant frequency $\omega_b$ is the first electromagnetic source configured to thread the ATS with the differential flux $\phi_\Delta = \frac{(\phi_1 - \phi_2)}{2}$ , and wherein the command circuit is further configured to modulate the differential flux $\phi_\Delta = \phi_\Delta(t)$ at a modulation frequency equal to the second resonant frequency $\omega_b$.

10. The system of claim 9, wherein the command circuit is further configured stabilize a dissipative cat qubit as the bosonic qubit by:
(iii) whilst performing operations (i) and (ii), delivering to the ATS, with the first electromagnetic source modulating the differential flux $\phi_\Delta = \phi_\Delta(t)$ at a modulation frequency equal to the second resonant frequency $\omega_b$, electromagnetic radiation at a frequency substantially equal to the second resonant frequency $\omega_b$ to drive the second physical oscillatory mode.

11. The system of claims 8 or 10, wherein the command circuit is configured to modulate the differential flux $\phi_\Delta = \phi_\Delta(t)$ at the modulation frequency equal to the first resonant frequency $\omega_a$ for a period of time so as to perform a Z-gate on the dissipative cat qubit.

12. The system of any of claims 8, 10 or 11, wherein the command circuit is configured to stabilize a squeezed cat qubit or a moon cat qubit as the dissipative cat qubit.

13. The system of any of claims 1-5, wherein the command circuit is configured to stabilize a GKP qubit as the bosonic qubit.

14. A system as claimed in any of claims 8 or 10-12, comprising two or more non-linear superconducting circuits each having a respective first physical oscillatory mode for hosting a dissipative cat qubit, wherein each of the non-linear superconducting circuits comprises only two or three RF ports.

15. A method for operating a system which is configured to host a bosonic qubit, the system comprising:

  a non-linear superconducting circuit comprising:

    at least one resonant portion, and
    an asymmetrically threaded superconducting quantum interference device (ATS) coupled to said at least one resonant portion, wherein the ATS comprises a pair of Josephson junctions and an inductive element, wherein the pair of Josephson junctions and the inductor are galvanically connected in parallel such that each of the Josephson junctions respectively forms first and second superconducting loops with the inductive element,
    wherein the non-linear superconducting circuit has a first physical oscillatory mode for hosting the bosonic qubit, the first physical oscillatory mode having a first resonant frequency $\omega_a$; and

  a command circuit comprising a first electromagnetic source configured to thread the first superconducting loop with a first magnetic flux $\phi_1$ and the second superconducting loop with a second magnetic flux $\phi_2$ such that the ATS is threaded with a differential flux $\phi_\Delta = \frac{(\phi_1 - \phi_2)}{2}$ in units of the superconducting flux quantum;
  wherein the method comprises:

    threading the first superconducting loop with the first magnetic flux $\phi_1$ and the second superconducting loop with the second magnetic flux $\phi_2$ such that the ATS is threaded with a differential flux $\phi_\Delta = \frac{(\phi_1 - \phi_2)}{2}$ ; and

modulating the differential flux $\phi_\Delta = \phi_\Delta(t)$ at a modulation frequency equal to the first resonant frequency $\omega_a$.

**Fig. 1**

**Fig. 2**

Fig. 3

Fig. 4

Fig. 5

Fig. 6

Fig. 7

Fig. 8

Fig. 9

Fig. 10

| | Europäisches Patentamt European Patent Office Office européen des brevets | **EUROPEAN SEARCH REPORT** | **Application Number** EP 24 30 6946 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 428 767 A1 (ALICE & BOB [FR]) 11 September 2024 (2024-09-11) * claims 1, 6, 7; figures 3, 11 * * paragraph [0001] * * paragraph [0008] * * paragraph [0010] * * paragraph [0034] * * paragraph [0042] * * paragraph [0052] - paragraph [0057] * * paragraph [0069] * * paragraph [0081] * * paragraph [0086] * ----- | 1-15 | INV. G06N10/40 |
| A | WO 2024/121273 A1 (ALICE & BOB [FR]) 13 June 2024 (2024-06-13) * claims 1, 12 * ----- | 1-15 | |
| | | | TECHNICAL FIELDS SEARCHED (IPC) G06N |

The present search report has been drawn up for all claims

| Place of search | Date of completion of the search | Examiner |
|---|---|---|
| The Hague | 25 March 2025 | Tidriri, Khaoula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6946

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2025

| Patent document cited in search report | | Publication date | Patent family member(s) | | Publication date |
|---|---|---|---|---|---|
| EP 4428767 | A1 | 11-09-2024 | EP | 4428767 A1 | 11-09-2024 |
| | | | WO | 2024184406 A1 | 12-09-2024 |
| WO 2024121273 | A1 | 13-06-2024 | EP | 4383139 A1 | 12-06-2024 |
| | | | WO | 2024121273 A1 | 13-06-2024 |

EPO FORM P0459

For more details about this annex : see Official Journal of the European Patent Office, No. 12/82

## REFERENCES CITED IN THE DESCRIPTION

### Patent documents cited in the description

- EP 23175147
- EP 21306965
- EP 22306815
- EP 22306816

### Non-patent literature cited in the description

- **LESCANNE, RAPHAËL et al.** Exponential suppression of bit-flips in a qubit encoded in an oscillator. *Nature Physics*, 2020, vol. 16 (5), 509-513
- **RÉGLADE, ULYSSE et al.** Quantum control of a cat qubit with bit-flip times exceeding ten seconds. *Nature*, 2024, 1-6
- **BERDOU, CAMILLE et al.** One hundred second bit-flip time in a two-photon dissipative oscillator. *PRX Quantum*, 2023, vol. 4 (2), 020350
- **PUTTERMAN, HARALD et al.** Preserving phase coherence and linearity in cat qubits with exponential bit-flip suppression. *arXiv preprint arXiv:2409.17556*, 2024
- **P. ARRANGOIZ-ARRIOLA** ; **E. A. WOLLACK** ; **Z. WANG** ; **M. PECHAL** ; **W. JIANG** ; **T. P. MCKENNA** ; **J. D. WITMER** ; **R. VAN LAER** ; **A. H. SAFAVI-NAEINI**. Resolving the energy levels of a nanomechanical oscillator. *Nature*, 2019, vol. 571, 537
- **KOUNALAKIS, MARIOS** ; **GERRIT EW BAUER** ; **YAROSLAV M. BLANTER**. Analog quantum control of magnonic cat states on a chip by a superconducting qubit. *Physical review letters*, 2022, vol. 129 (3), 037205
- **KOZIN, VALERII K. et al.** Quantum phase transitions and cat states in cavity-coupled quantum dots. *Physical review research*, 2024, vol. 6 (3), 033188
- **CHOWDHURY, SHOUMIK**. *Bosonic Quantum Error Correction with a Heavy Fluxonium Control Qubit*, 2024
- **JHA, SHANTANU R**. *Extensible Platforms for Bosonic Quantum Error Correction*, 2024